# EUROPEAN PATENT APPLICATION

(11) **EP 2 109 175 A1**
(43) Date of publication of application: **14.10.2009**
(21) Application number: 08790830.7
(22) Date of filing: 03.07.2008
(51) Int. Cl.: H01M 8/24, H01M 8/10

(54) **FUEL CELL**

(30) Priority: 10.07.2007 JP 2007181264
(71) Applicant: Seiko Instruments Inc., Chiba-shi Chiba 261-8507 (JP)
(72) Inventor: OZAKI, Toru, Chiba-shi Chiba 261-8507 (JP); SARATA, Takafumi, Chiba-shi Chiba 261-8507 (JP); YUZURIHARA, Kazutaka, Chiba-shi Chiba 261-8507 (JP); IWASAKI, Fumiharu, Chiba-shi Chiba 261-8507 (JP); TAMACHI, Tsuneaki, Chiba-shi Chiba 261-8507 (JP); YANASE, Norimasa, Chiba-shi Chiba 261-8507 (JP); ISHISONE, Noboru, Chiba-shi Chiba 261-8507 (JP)
(74) Representative: Cloughley, Peter Andrew
(86) International application number: PCT/JP2008/062026
(87) International publication number: WO 2009/008315

(57) **Abstract**

After hydrogen fed from introduction hole 22 is dispersed in a first space 15 as a first buffer part, the hydrogen is further dispersed in a first recess part 28 and a second recess part 30 as a second buffer part, which is then uniformly dispersed in individual paths 26 between block groups 25 to make the volume of hydrogen flowing in the paths 26 uniform, and is then transferred at a sufficient feed pressure into small openings 24 through the second recess part 29 for uniformly feeding hydrogen to each cell unit.

## Description

### Technical Field

The present invention relates to a fuel cell feeding an anode fluid from the manifold to each cell unit of the cell stack.

### Background of the Invention

Due to the upsurge of the recent energy issues, an electric source with a higher energy density and with cleaner discharges has been demanded. Fuel cell is a generator with an energy density several fold those of the existing batteries. Fuel cell has characteristic features of higher energy efficiency and no or less nitrogen oxides or sulfur oxides in discharged gases. Therefore, fuel cell is an extremely effective device satisfying the demand as a next-generation electric source device.

The cell of a fuel cell comprises an anode-side catalyst (anode) and a cathode-side catalyst (cathode) on both the sides of the solid polymer electrolyte membrane as an electrolyte membrane. By alternately arranging a separator with an anode fluid path and a cathode fluid path formed thereon while these paths sit back to back and the cell, a cell unit is formed. By stacking a plurality of such cell units together, then, a cell stack is constructed. A fuel cell of such stack structure is equipped with a manifold for uniformly dividing a fuel to each of the cell units to uniformly feed the fuel in the cell stack, so as to feed the fuel from the manifold to each of the cell units.

When the fuel is fed non-uniformly to each of the cell units in the cell stack, the output from each of the cell units varies, leading to the reduction of the power generation, so that the output from the whole cell stack is affected by the output from a low-output cell. Therefore, it is demanded that such manifold should have a uniform division performance at a higher dimension for the fuel supply to each of the cell units in the cell stack.

In such circumstances, various techniques for uniformly feeding a fuel to each of the cell units in a cell stack have been proposed (the publication of JP-A-Hei 9-161828). For fuel supply, in the publication, the manifold is constructed with a second space for dispersion, which is arranged adjacent to the cell stack, and a first space where a hydrogen rich gas is fed. The hydrogen rich gas fed in the first space is transferred through a through hole to the second space, where the hydrogen rich gas is dispersed and fed to each of the cell units.

Because the hydrogen rich gas is dispersed in the second space, the variation in the feed volume between cell units close to the through hole and cell units remote from the through hole is reduced, so that the hydrogen rich gas can be fed uniformly to all the cell units in the cell stack.
Patent reference 1: JP-A-Hei 9-161828

### Disclosure of the Invention

### Problem that the Invention is to Solve

Because the hydrogen rich gas is necessarily dispersed in the second space according to the conventional technique, it was required to make the ratio of the volume of the second space to the whole volume of the first space and the second space larger. Unless the distance from the through hole to the cell units is at a certain dimension, therefore, the feed volume of the hydrogen rich gas varies depending on the positional relation between the through hole and each of the cell units, so that the manifold should inevitably be made as a larger type so as to uniformly feed the hydrogen rich gas to each of the cell units.

In such circumstances, the invention has been achieved. It is an object of the invention to provide a fuel cell capable of uniformly feeding an anode fluid to each of the cell units even when the manifold is made as a small type.

### Means for Solving the Problem

So as to attain the object, in a first aspect of the invention, a fuel cell comprises a cell with an anode and a cathode connected together through an electrolyte membrane, a cell stack where a plurality of a cell unit with a separator equipped with an anode fluid path and the cell are stacked together, and a manifold for feeding an anode fluid to a position of the cell unit which the anode fluid path faces, **characterized in that** the manifold comprises a top plate equipped with introduction holes through which the anode fluid is introduced, and a bottom plate where a plurality of small openings facing the anode fluid path are arranged in series along the direction of the stacked cell units and where the flow space of the anode fluid is formed on the upper face of the bottom plate between the inner face of the top plate and the bottom plate; that the introduction holes are two in number as arranged in such a manner that the projection parts of the introduction holes on the bottom plate are positioned through the array of the small openings arranged in series on both the sides of the array thereof; that individual block groups forming paths for dispersing the anode fluid fed from the introduction holes into the small openings are arranged on the upper face of the bottom plate between the projection parts of the introduction holes and the small openings; and that the anode fluid fed from the two introduction holes is put in contact with the individual projection parts on the upper face of the bottom plate to reduce the flow rate thereof, so that the anode fluid at a reduced flow rate is allowed to flow in the individual paths between the block groups and be then dispersed into the small openings lying between the block groups.

Due to such characteristic feature, the anode fluid fed from the two introduction holes is brought in contact with the projection parts on the upper face of the bottom plate to reduce the flow rate, so that the anode fluid at a reduced flow rate is allowed to flow in the individual paths between the block groups and be then dispersed through the block groups on both the sides into the small openings. Therefore, the anode fluid can be dispersed in a plurality of the small openings in such a limited space to be fed at a sufficient feed pressure into the small openings. Even when the manifold is of a small type, hence, the anode fluid can uniformly be fed to each of the cell units.

In a second aspect of the invention, further, the fuel cell is **characterized in that** the paths formed with the block groups are plurally formed and the width of such paths remote from the projection parts is larger than the width of such paths close to the projection parts.

Owing to such characteristic feature, the width of the paths remote from the projection parts to which the anode fluid is fed is larger, so that the flow resistance in such remote paths is reduced for ready flow. Thus, the anode fluid can be fed uniformly through a plurality of the paths into the small openings, despite the distances from the projection parts.

In a third aspect of the invention, further, the fuel cell is **characterized in that** the paths formed with the block groups are plurally formed and the length of such paths remote from the projection parts is shorter than the length of such paths close to the projection parts.

Owing to such characteristic feature, the loss of the flow pressure in the remote paths is reduced for ready flow because the length of the paths remote from the projection parts where the anode fluid is fed is shorter, so that the anode fluid can uniformly be fed through a plurality of the paths into the small openings, despite the distances from the projection parts.

In a fourth aspect of the invention, the fuel cell is **characterized in that** the introduction holes are arranged in such a manner that the projection parts on the bottom plate are arranged in an opposite direction to each other toward the direction of the small openings arranged.

Due to such characteristic feature, the anode fluid is fed from the introduction holes arranged in an opposite direction to each other toward the direction of the small openings arranged, so that the feed distribution of the anode fluid along the direction of the small openings arranged can be suppressed.

In a fifth aspect of the invention, the fuel cell is **characterized in that** the small openings are arranged in such a manner that the small openings close to the projection parts are more apart from the block groups lying between the projection parts and the small openings than the small openings remote from the projection parts.

Due to such characteristic feature, the small openings are arranged at a slanting state between the block groups, so that the feed distribution of the anode fluid can be suppressed more highly.

In a sixth aspect of the invention, further, the fuel cell is **characterized in that** the distance from the block groups to the introduction holes is half-fold or more the distance from the block groups through the introduction holes to the ends of the flow space.

Due to such characteristic feature, the distance from the block groups to the introduction holes can be secured sufficiently in the limited flow space, so that the anode fluid can be dispersed sufficiently.

In a seventh aspect of the invention for achieving the object, a fuel cell comprises a cell with an anode and a cathode connected together through an electrolyte membrane, a cell stack where a plurality of a cell unit with a separator equipped with an anode fluid path and the cell are stacked together, and a manifold for supplying the anode fluid to a position of the cell unit where the anode fluid path faces, **characterized in that** the manifold comprises a top plate equipped with introduction holes through which the anode fluid is introduced, a bottom plate where a plurality of small openings facing the anode fluid path are arranged in series and where the flow space of the anode fluid is formed on the upper face of the bottom plate between the inner face of the top plate and the bottom plate, and a partition plate separating the flow space into a first space on the side of the top plate and a second space on the side of the bottom plate, where second introduction holes are arranged at positions different from the projection parts of the introduction holes, where the second introduction holes are two in number as arranged in such a manner that the second projection parts on the bottom plate are arranged through the array of the small openings arranged in series on both the sides of the array thereof and individual block groups forming paths for dispersing the anode fluid fed from the second introduction holes into the small openings are formed on the upper face of the bottom plate between the second projection parts of the second introduction holes and the small openings; the flow rate of the anode fluid fed from the introduction holes is reduced in the first space to bring the anode fluid at a reduced flow rate in contact with the second projection parts on the upper face of the bottom plate from the two second introduction holes to further reduce the flow rate, so that the anode fluid at a reduced flow rate is allowed to flow in the individual paths formed with the block groups and be then dispersed into the small openings lying between the block groups.

Due to such characteristic feature, the flow rate of the anode fluid fed from the introduction holes is reduced in the first space, so that the anode fluid at a reduced flow rate is brought in contact with the second projection parts on the upper face of the bottom plate from the two second introduction holes to further reduce the flow rate, and the anode fluid with such sufficiently reduced flow rate is then allowed to flow in the individual paths formed with the block groups and be then dispersed into the small openings. Therefore, the anode fluid can be dispersed for a plurality of the small openings and be fed at a sufficient feed pressure into a plurality of the small openings, in the limited flow space. Even when the manifold is made as a small type, therefore, the anode fluid can be fed uniformly to the individual cell units, each comprising the cell and the separator.

In an eighth aspect of the invention, the fuel cell is **characterized in that** the path area of the introduction holes is larger than the path area of the second introduction holes.

Owing to such characteristic feature, the flow rate of the anode fluid can be reduced in an accelerated manner in flowing in the second introduction holes with the larger path area.

In a ninth aspect of the invention, further, the fuel cell is **characterized in that** the paths formed with the block groups are plurally formed and the width of the paths remote from the second projection parts is larger than the width of the paths close to the second projection parts.

Owing to such characteristic feature, the width of the paths remote from the second projection parts to which the anode fluid is fed is so larger that the flow resistance in the remote paths is reduced for ready flow, so that the anode fluid can be fed uniformly from a plurality of the paths into the small openings, despite the distances from the second projection parts.

In a tenth aspect of the invention, further, the fuel cell is **characterized in that** the paths formed with the block groups are plurally formed and the length of the paths remote from the second projection parts is shorter than the length of the paths close to the second projection parts.

Due to such characteristic feature, the length of paths remote from the second projection parts to which the anode fluid is fed is shorter, so that the loss of the flow pressure in the remote paths is reduced for ready flow. Thus, the anode fluid can be fed uniformly from a plurality of the paths into the small openings, despite the distances from the second projection parts.

In an eleventh aspect of the invention, additionally, the fuel cell is **characterized in that** the second introduction holes are arranged in such a manner that the second projection parts on the bottom plate are arranged in an opposite direction to each other toward the direction of the small openings arranged.

Due to such characteristic feature, the anode fluid is fed from the second introduction holes arranged in an opposite direction to each other toward the direction of the small openings arranged, so that the feed distribution of the anode fluid along the direction of the small openings arranged can be suppressed.

In a twelfth aspect of the invention, further, the fuel cell is **characterized in that** the small openings close to the second projection parts are arranged in such a manner that the small openings are more apart from the block groups lying between the second projection parts and the small openings than the small openings remote from the second projection parts.

Due to such characteristic feature, the small openings are arranged at a slanting state between the block groups, so the feed distribution of the anode fluid can further be suppressed.

In a thirteenth aspect of the invention, further, the distance from the block groups to the second introduction holes is half-fold or more the distance from the block groups through the second introduction holes to the ends of the flow space.

Due to such characteristic feature, the distance from the block groups to the second introduction holes can be secured sufficiently in the limited flow space, so that the anode fluid can be dispersed sufficiently.

### Brief Description of the Drawings

[Fig. 1] A view of the appearance of a fuel cell in a first embodiment.
[Fig. 2] A perspective view of the decomposed outer manifold.
[Fig. 3] A view of the appearance of the top plate.
[Fig. 4] A view of the appearance of the partition plate.
[Fig. 5] A view of the appearance of the inner face of the bottom plate.
[Fig. 6] A view of the appearance of the inner face of the bottom plate, depicting the flow status of a fuel flowing on the bottom plate.
[Fig. 7] A perspective view of the decomposed outer manifold of a fuel cell in a second embodiment.
[Fig. 8] A view of the appearance of the inner face of the bottom plate.
[Fig. 9] A view of the appearance of the bottom plate, depicting the flow status of a fuel flowing on the bottom plate.
[Fig. 10] A view of the appearance of the inner face of the bottom plate in the outer manifold of a fuel cell in a third embodiment.
[Fig. 11]A view of the appearance of the inner face of the bottom plate in the outer manifold of a fuel cell in a fourth embodiment.
[Fig. 12] A view of the appearance of the inner face of the bottom plate, depicting the flow status of a fuel flowing on the bottom plate.
[Fig. 13] A view of the appearance of the inner face of the bottom plate in the outer manifold of a fuel cell in a fifth embodiment.

### Best Mode for Carrying out the Invention

### First Embodiment

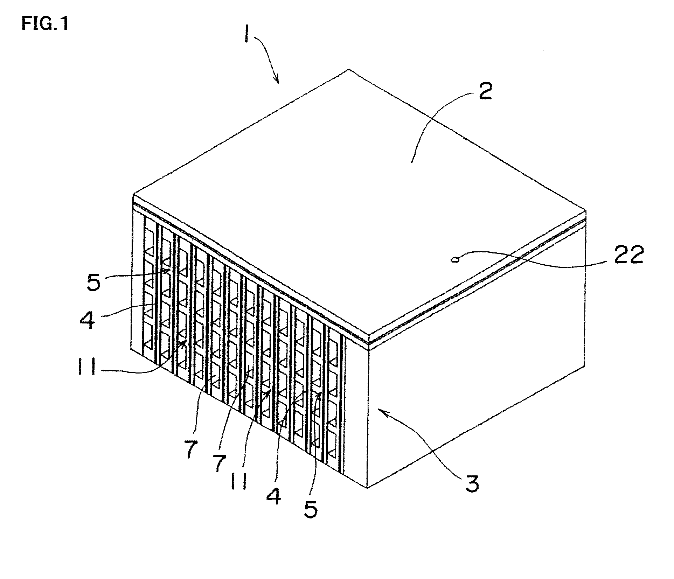

A first embodiment is now described with reference to Figs. 1 through 6.

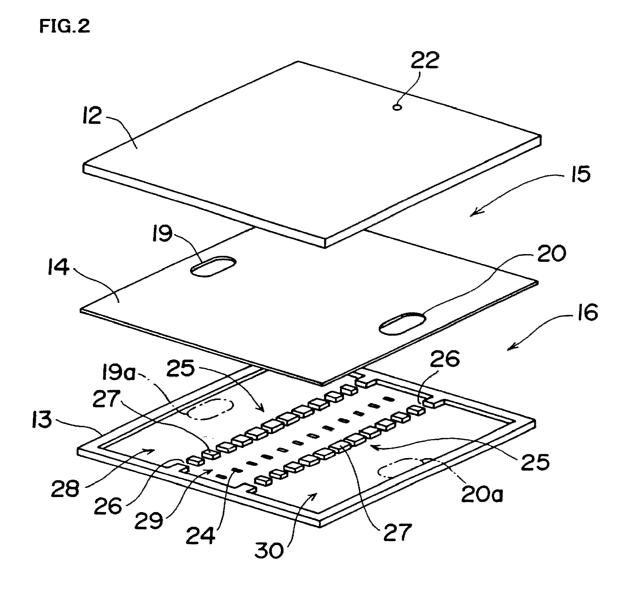

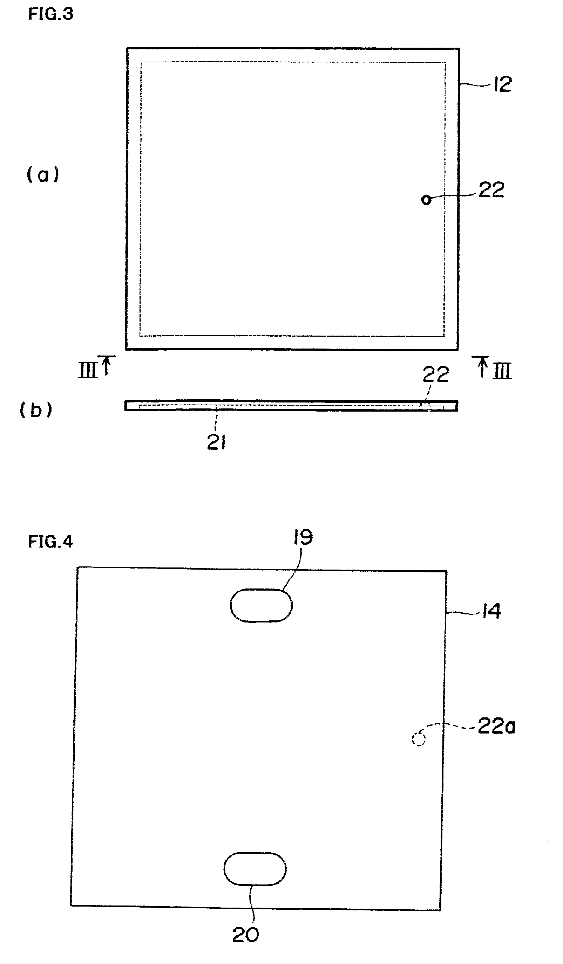

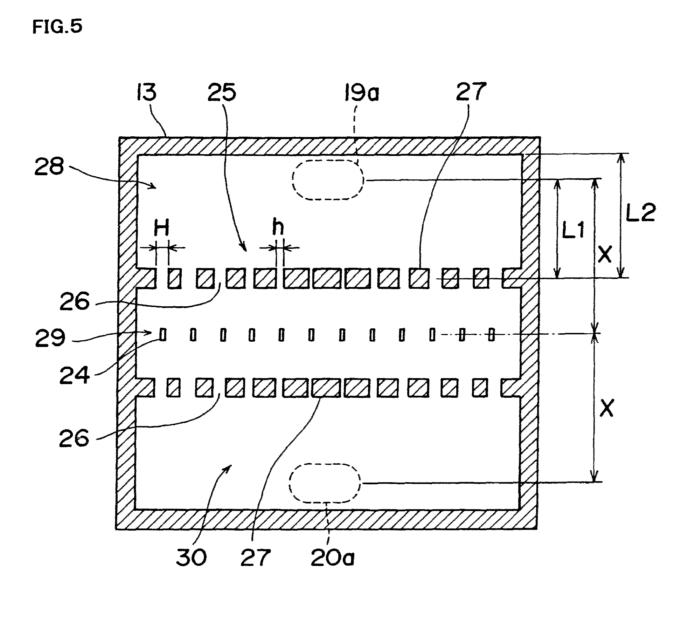

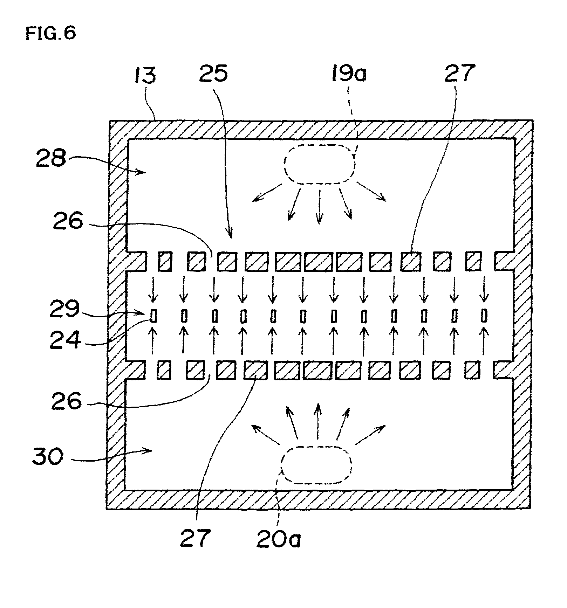

Fig. 1 is a view of the appearance of a fuel cell in the first embodiment; Fig. 2 is a perspective view of the decomposed outer manifold; and Fig. 3 are views of the appearance of the top plate, Fig. 3(a) is a plane view of the top plate and Fig. 3(b) is a saggital view of Fig. 3(a) along the line III-III. Furthermore, Fig. 4 is a view of the appearance of the partition plate; Fig. 5 depicts the appearance of the inner face of the bottom plate; and Fig. 6 shows the appearance of the inner face of the bottom plate, depicting the flow status of a fuel flowing on the bottom plate.

As shown in the figures, a fuel cell 1 in this embodiment is equipped with an outer manifold 2 as the manifold for feeding a fuel (hydrogen) as an anode fluid, where hydrogen is fed from the outer manifold 2 to a cell stack 3. The outer manifold 2 is connected with a fuel supply part not shown in the figures, for feeding hydrogen obtained from for example a hydrogen-absorbing alloy, while a control circuit not shown in the figures is connected with the electricity generation part of the cell stack 3.

The cell 4 of the cell stack 3 is a membrane electrode assembly, where an anode-side catalyst (anode) and a cathode-side catalyst (cathode) are arranged on both the sides of a solid polymer electrolyte membrane as an electrolyte membrane. Then, a cell unit 11 is formed by alternately stacking a separator 5 with an anode fluid path and a cathode fluid path 7 formed at a state of their sitting back to back and the cell 4. The cell stack 3 is constructed by stacking together a plurality of the cell unit 11. So as to uniformly feed hydrogen in the cell stack 3 by uniformly dividing hydrogen in the anode fluid path of the separator 5 stacked in each cell unit 11, the outer manifold 2 is arranged in the fuel cell 1 of such stack structure.

Herein, the separator 5 is not limited to the shape where the anode fluid path and the cathode fluid path 7 are formed at a state of their sitting back to back. The separator may be in any shape where the anode fluid can be fed to the anode and the cathode fluid can be fed to the cathode.

The outer manifold 2 is now described below with reference to Figs. 2 through 5.

As shown in Fig. 2, the outer manifold 2 comprises a top plate 12 and a bottom plate 13, where a hydrogen flow space is formed between the inner face of the top plate 12 and the upper face of the bottom plate 13. A partition plate 14 is arranged between the top plate 12 and the bottom plate 13. The partition plate 14 separates the hydrogen flow space into a first space 15 on the side of the top plate 12 and a second space 16 on the side of the bottom plate 13.

As shown in Figs. 2 and 3, a recess part 21 is formed in the inside of the top plate 12, while an introduction hole 22 for hydrogen introduction is arranged through the top plate 12. A fuel supply part not shown in the figures is connected with the introduction hole 22.

As shown in Figs. 2 and 4, communication holes 19, 20 as second introduction holes are arranged through the partition plate 14. The communication holes 19, 20 are arranged on positions different from the position of the projection part 22a of the introduction hole 22 along the stack direction. These communication holes are positioned on the ends of the partition plate 14 (the upper and bottom ends in Fig. 4) while these holes are at a state where the holes face each other. The communication holes 19, 20 are arranged at positions on both the sides of the array of the arranged small openings 24 described below in such a manner that the array thereof lies between the communication holes 19, 20.

As shown in Figs. 2 and 5, hydrogen is fed through the communication holes 19, 20 through the partition plate 14 onto the upper face of the bottom plate 13. The hydrogen fed is then fed into the second space 16, while the hydrogen is in contact with the upper face of the bottom plate 13, where the projection parts 19a, 20a (second projection parts) of the communication holes 19, 20 exist along the stack direction. On the upper face of the bottom plate 13, there are formed a plurality (12 such small openings along the left and right direction in Fig.5 as a depicted example) of small openings 24 in an array which face the anode fluid path of the cell unit 11 (see Fig. 1). For example, one or a plurality of the small openings 24 are formed in a cell unit 11 (see Fig. 1).

On the upper face of the bottom plate 13 between the projection part 19a and the small openings 24 and on the upper face of the bottom plate 13 between the projection part 20a and the small openings 24, block groups 25 are individually formed. The paths 26 for dispersing hydrogen fed through the communication holes 19, 20 into the small openings 24 are individually formed with the block groups 25.

The second space 16 formed with the bottom plate 13 and the partition plate 14 is separated into a first recess part 28 enclosed with the projection part 19a and the block group 25 on the upper side in Fig.5, a second recess part 29 enclosed through the small openings 24 with the individual block groups 25, and a third recess part 30 enclosed with the projection part 20a and the block group 25 on the lower side in Fig. 5.

As to the position of the communication hole 19, namely the position of the projection part 19a as shown in Fig. 5, the distance L1 from the block group 25 to the projection part 19a is set to a distance approximate to the same distance as the distance L2 from the block group 25 through the projection part 19a to the end of the first recess part 30 as the end of the second space. In other words, the distance L1 from the block group 25 to the projection part 19a is set to half-fold or more the distance L2 to the end of the first recess part 28. The communication hole 20 is arranged at a position in line symmetry along the center line of the arranged small openings 24 along the direction thereof as the center. Specifically, the communication hole 20 is arranged at a position at the equal distance X from the center line of the arranged small openings 24 along the direction crossing orthogonally with the center line of the arranged small openings 24, so that the distance X can keep the relation with the distance L1 and the distance L2.

By setting the distance L1 from the block group 25 to the projection part 19a (20a) to half-fold or more the distance L2 to the end of the first recess part 28 (third recess part 30), the distance for leading hydrogen fed from the communication hole 19 (20) into the individual paths 26 between the individual block groups 25 can be sufficiently secured, so that the hydrogen can be dispersed appropriately in the first recess part 28 (the third recess part 30) as a limited space.

As shown in Fig. 5, a plurality of blocks 27 are arranged in the block groups 25, while the paths 26 are formed between the blocks 27. The width of the blocks 27 close to the projection parts 19a, 20a (along the left and right direction in the figure) is larger than the width of the blocks 27 remote from the projection parts 19a, 20a. In other words, the width H of the paths 26 remote from the projection parts 19a, 20a is larger than the width h of the paths 26 close to the projection parts 19a, 20a, so that the pressure loss in the paths 26 remote from the projection parts 19a, 20a is reduced.

In the depicted example, the small openings 24 and the paths 26 are at a state where they are in one-to-one correspondence. However, the small openings 24 and the paths 26 are not necessarily arranged so that they might be in one-to-one correspondence.

In such manner, the hydrogen dispersed in the first recess part 28 and the third recess part 30 is uniformly dispersed from the paths 26 into the small openings 24 through the second recess part 29, despite the distances from the projection part 19a or 20a, so that the hydrogen can flow at a uniform volume. Additionally because hydrogen flows from the first recess part 28 and the third recess part 30 into the second recess part 29, the feed pressure into the small openings 24 can sufficiently be secured. Hydrogen divided uniformly at a sufficient feed pressure into the small openings 24 flows downward (along the direction crossing with the flow direction in the paths 26) from the small openings 24, to be then fed into the anode fluid path of each cell unit 11 (see Fig. 1).

In the embodiment as described above, the partition plate 14 is arranged to separate the hydrogen flow space formed with the top plate 12 and the bottom plate 13 into the first space 15 and the second space 16. However, the hydrogen flow space can be constructed in partitioned structures of the first recess part 28, the third recess part 30 and the second recess part 29 with the small openings 24 formed therein, without any partition plate 14 arranged therein.

In this case, the introduction holes 22 are arranged at two positions corresponding to the fist recess part 28 and the third recess part 30. Hydrogen from the introduction holes 22 is at a slower flow rate while the hydrogen is in contact with the projection parts of the introduction holes 22, so that the hydrogen flows from the first recess part 28 and the third recess part 30 through the paths 26 between the block groups 25 into the small openings 24. Then, the flow area of the introduction holes 22 may be made larger. Because the introduction holes 22 are preferably smaller from the respect of the relation with outer connection units, the introduction holes 22 are in a shape with an increasing flow area from the inlet to the outlet along the channel direction of the introduction holes 22.

Furthermore, the structure with no partition plate arranged may be applicable to all the embodiments as described below.

Based on Fig. 6, the status of hydrogen communication is described below.

Hydrogen is fed from the introduction holes 22 into the first space 15, and hydrogen is then dispersed in the first space 15 along the plane direction (a first buffer part). Hydrogen at a reduced flow rate due to the dispersion in the first space 15 is hit from the communication holes 19, 20 with larger flow path areas onto the upper face (projection parts 19a, 20a) of the bottom plate 13 and is then transferred independently into the first recess part 28 and the third recess part 30 in the second space 16, where hydrogen is dispersed in the first recess part 28 and the third recess part 30 along the horizontal direction (the arrow direction in Fig. 6) (a second buffer part).

Hydrogen from the communication holes 19, 20 is more readily dispersed along the horizontal direction (the arrow direction in Fig. 6) by allowing the hydrogen to be hit onto the upper face of the bottom plate 13. Since the flow path areas of the communication holes 19, 20 are larger, the hydrogen flowing into the second buffer part is more readily dispersed than the hydrogen flowing into the first buffer part.

Hydrogen at a reduced flow rate due to the dispersion in the first recess part 28 and the third recess part 30 is divided in a plurality of the paths 26 between the block groups 25, so that the hydrogen can flow in the individual paths. As described above (as shown in Fig.5), a plurality of the paths 26 are formed in such a shape that the width H of the paths 26 remote from the projection parts 19a, 20a is larger than the width h of the paths 26 close to the projection parts 19a, 20a, so that hydrogen can be divided uniformly in the individual paths 26 despite the distances from the projection parts 19a, 20a. Hydrogen uniformly divided in the individual paths 26 flows into the second recess part 29, from which the hydrogen is transferred at a sufficient feed pressure into the small openings 24. From the small openings 24, then, hydrogen flows downward (along the direction crossing with the flow direction in the paths 26) and is fed to the anode fluid path of the cell unit 11.

Therefore, the hydrogen fed from the communication holes 22 in the fuel cell 1 for feeding hydrogen through the outer manifold 2 to the cell stack 3 is dispersed in the first buffer part and is subsequently dispersed additionally in the second buffer part, for uniform dispersion into the individual paths 26 between the block groups 25 to make the volume of hydrogen flowing in the paths 26 uniform, so that hydrogen can be fed at a sufficient feed pressure into the small openings 24. Hence, the manifold is not made as a large type with for example a larger dispersion space arranged therein. In other words, the manifold even of a small type can feed uniformly hydrogen at a sufficient feed pressure to each cell unit 11.

### Second Embodiment

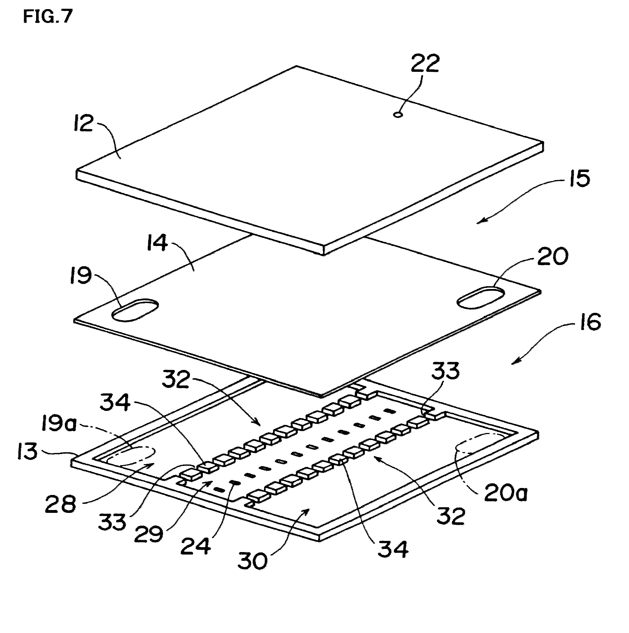

With reference to Figs. 7 through 9, a second embodiment is now described below.

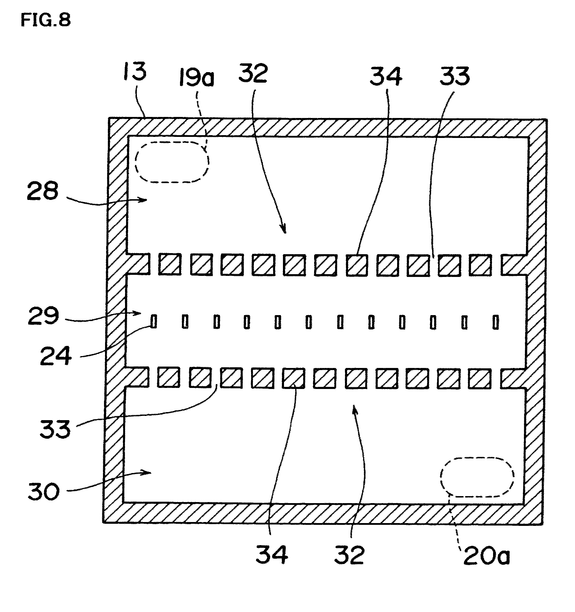

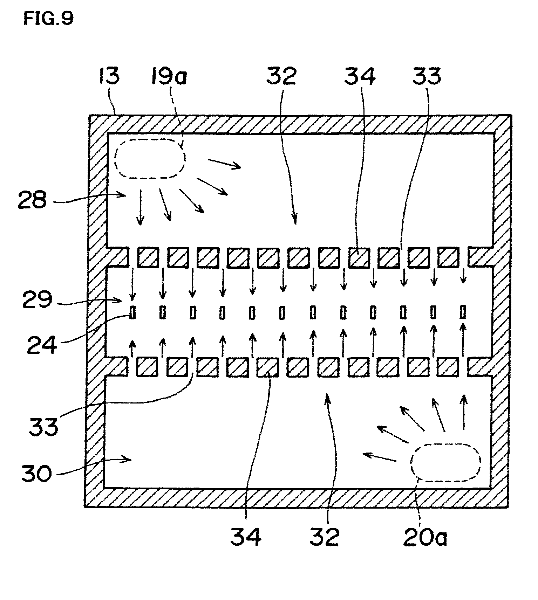

Fig. 7 depicts a perspective view of the decomposed outer manifold of a fuel cell in a second embodiment; Fig. 8 shows the appearance of the inner face of the bottom plate; Fig. 9 shows the appearance of the inner face of the bottom plate, depicting the flow status of a fuel flowing on the bottom plate. In the fuel cell of the second embodiment, the shape of the block groups formed on the bottom plate of the outer manifold and the positions of the communication holes 19, 20 differ from those in the first embodiment. Accordingly, the same members as the members shown in Figs. 1 through 6 are marked with the same symbols, so overlapping descriptions are skipped.

As shown in the figures, the communication holes 19, 20 are arranged in such a manner that the projection parts 19a, 20a are in an opposite direction to each other toward the direction of the arranged small openings 24 (the left and right direction in Fig. 8). In other words, the communication hole 19 is arranged in such a manner that the projection part 19a positioned upward in Fig. 8 is positioned on a more left side in the figure, while the communication hole 20 is arranged in such a manner that the projection part 20a positioned downward in Fig. 8 is positioned on a more right side in the figure.

On the upper face between the projection parts 19a, 20a of the communication holes 19, 20 and the small openings 24, additionally, block groups 32 are individually formed. The block groups 32 form paths 33 to disperse the hydrogen fed from the communication holes 19, 20 into the small openings 24.

As in the first embodiment, the second space 16 formed with the bottom plate 13 and the partition plate 14 is separated into a first recess part 28 enclosed with the projection part 19a and the upper block group 32 in Fig. 8, a second recess part 29 enclosed through the small openings 24 with the individual block groups 32, and a third recess part 30 enclosed with the projection part 20a and the lower block group 32 in Fig. 8.

In the block groups 32, a plurality of blocks 34 are arranged in an array, and the space between the blocks 34 is a path 33. The width of a plurality of the blocks 34 (the left and right direction in the figure) is uniform, so that the width of the path 33 is also uniform structurally.

Because the communication holes 19, 20 are arranged in such a manner that the projection parts 19a, 20a thereof are in an opposite direction to each other toward the arranged small openings 24 (the left and right direction in Fig. 8), the feed distribution of hydrogen to be fed to the second recess part 29 along the direction of the arranged small openings 24 is inversed through the individual blocks 34, so that as shown with the arrows in Fig. 9 the distribution of the hydrogen feed volume into the small openings 24 in the second recess part 29 can be suppressed.

### Third Embodiment

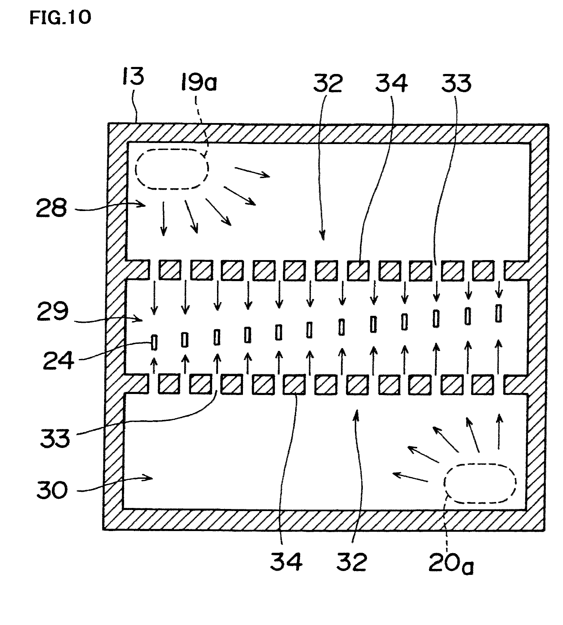

With reference to Fig. 10, a third embodiment is now described.

Fig. 10 shows the appearance of the inner face of a bottom plate in the outer manifold of a fuel cell in a third embodiment. Herein, the same members as those in the second embodiment are marked with the same symbols. Therefore, overlapping descriptions are skipped.

In the third embodiment as shown in Fig. 10, the small openings 24 are arranged at a slanting fashion. Specifically, the small openings 24 are arranged in such a manner that the small openings 24 close to the projection parts 19a, 20a are more apart from the block groups 32 lying between the projection parts 19a, 20a and the small openings than the small openings 24 remote from the projection parts 19a, 20a. In other words, the small openings 24 are arranged at a slanting state toward the upper right in the figure.

Therefore, the hydrogen feed distribution along the direction of the arranged small openings 24 in the second recess part 29 is more highly suppressed, so that hydrogen can be fed more uniformly into the small openings.

### Fourth Embodiment

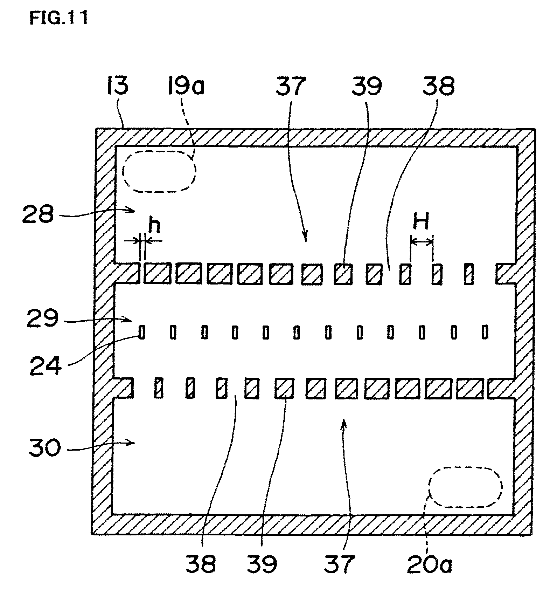

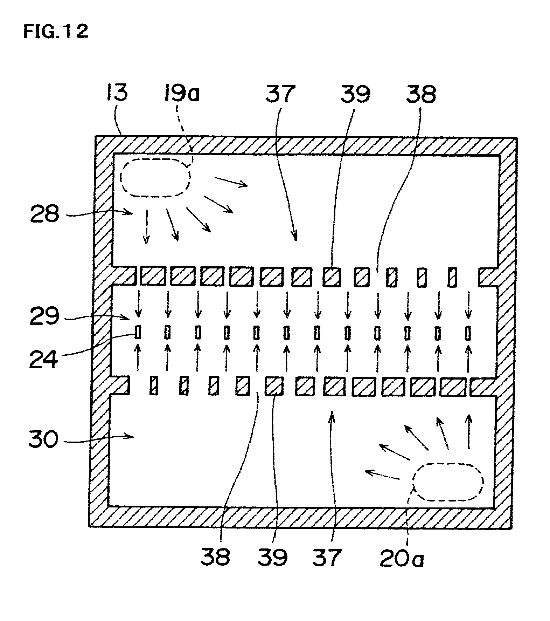

With reference to Figs. 11 and 12, a fourth embodiment is now described.

Fig. 11 depicts the appearance of the inner face of a bottom plate in the outer manifold of a fuel cell in a fourth embodiment; and Fig. 12 is a view of the appearance of the inner face of the bottom plate, depicting the flow status of a fuel flowing on the bottom plate. Herein, the same members as those in the second embodiment are marked with the same symbols. Therefore, overlapping descriptions are skipped.

On the upper face between the projection parts 19a, 20a of the communication holes 19, 20 and the small openings 24, block groups 37 are individually formed. The block groups 37 form paths 38 for dispersing hydrogen fed from the communication holes 19, 20 (see Fig. 7) into the small openings 24.

The width of blocks 39 close to the projection parts 19a, 20a (along the left and right direction in the figure) is larger than the width of blocks 39 remote from the projection parts 19a, 20a. Specifically, the width H of paths 38 remote from the projection parts 19a, 20a (meaning upper paths 38 in the figure as shown on the right side and lower paths 38 in the figure as shown on the left side) is larger than the width h of paths 38 close to the projection parts 19a, 20a (meaning upper paths 38 in the figure as shown on the left side and lower paths 38 in the figure as shown on the right side), so that the pressure loss in the paths 38 remote from the projection parts 19a, 20a is reduced. The block groups 37 are in a shape of dot symmetry around the center point of the bottom plate 13 as the center.

As shown in Fig. 12, therefore, hydrogen can be divided uniformly in the individual paths 38 despite the distances from the projection parts 19a, 20a. Hydrogen uniformly divided in the individual paths 38 flows in the second recess part 29 and is then transferred at a sufficient feed pressure into the small openings 24, so that hydrogen flows downward (along the direction crossing with the direction of the flow in the paths 38) from the small openings 24 to the anode fluid path of the cell unit 11 (see Fig. 1).

### Fifth Embodiment

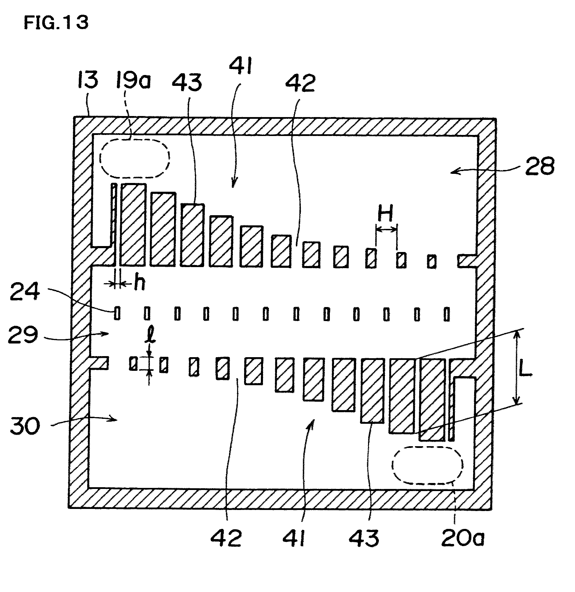

With reference to Fig.13, a fifth embodiment is described below.

Fig. 13 is a view of the appearance of the inner face of a bottom plate in the outer manifold of a fuel cell in a fifth embodiment. Herein, the same members as those in the second embodiment are marked with the same symbols. Therefore, overlapping descriptions are skipped.

On the upper face between the projection parts 19a, 20a of the communication holes 19, 20 and the small openings 24, block groups 41 are individually formed. The block groups 41 form paths 42 for dispersing hydrogen fed from the communication holes 19, 20 (see Fig. 7) into the small openings 24.

The length of blocks 43 close to the projection parts 19a, 20a (along the left and right direction in the figure) is larger than the length of blocks 43 remote from the projection parts 19a, 20a. Specifically, the length I of paths 42 remote from the projection parts 19a, 20a (meaning upper paths 42 in the figure as shown on the right side and lower paths 42 in the figure as shown on the left side) is shorter than the length L of paths 42 close to the projection parts 19a, 20a (meaning upper paths 42 in the figure as shown on the left side and lower paths 42 in the figure as shown on the right side), so that the pressure loss in the paths 42 remote from the projection parts 19a, 20a is reduced.

The width of blocks 43 close to the projection parts 19a, 20a (along the left and right direction in the figure) is larger than the width of blocks 43 remote from the projection parts 19a, 20a. Specifically, the width H of paths 42 remote from the projection parts 19a, 20a (meaning upper paths 42 in the figure as shown on the right side and lower paths 42 in the figure as shown on the left side) is larger than the width h of paths 42 close to the projection parts 19a, 20a (meaning upper paths 42 in the figure as shown on the left side and lower paths 42 in the figure as shown on the right side), so that the pressure loss in the paths 42 remote from the projection parts 19a, 20a is reduced. The blocks 43 are arranged in a shape of dot symmetry around the center point of the bottom plate 13 as the center.

Herein, only the length of the paths 42 may be modified while the width of the paths 42 is set equal by composing the width of a plurality of blocks 43 in the block groups 41 equally.

By modifying the width and length of the paths 42, the hydrogen flowing from the paths 42 into the small openings 24 can be uniformly divided in a constant volume, despite the distances from the projection parts 19a, 20a. The hydrogen uniformly divided into the small openings 24 flows downward (along the direction crossing with the flow direction in the paths 42) from the small openings 24, to be fed into the anode fluid path of each cell unit 11 (see Fig. 1).

In the embodiments as described above, hydrogen is exemplified as an anode fluid. The embodiments may be applicable to the supply of other fuels including methanol.

### Industrial Applicability

Owing to such characteristic features, an anode fluid can be dispersed in a plurality of small openings in a limited flow space, so that the anode fluid can be fed at a sufficient feed pressure into the small openings. Therefore, such anode fluid can be fed uniformly to each cell unit even when the manifold is made as a small type.

## Claims

1. A fuel cell comprising a cell with an anode and a cathode connected together through an electrolyte membrane, a cell stack where a plurality of cell units each with a separator equipped with an anode fluid path and the cell are stacked together, and a manifold for feeding an anode fluid to a position of the cell unit which the anode fluid path faces, **characterized in**
**that** the manifold comprises a top plate equipped with introduction holes through which the anode fluid is introduced, and a bottom plate where a plurality of small openings facing the anode fluid path are arranged in series along the direction of the stacked cell units and where the flow space of the anode fluid is formed on the upper face of the bottom plate between the inner face of the top plate and the bottom plate;
**that** the introduction holes are two in number as arranged in such a manner that the projection parts of the introduction holes on the bottom plate are positioned on both the sides of the array of the small openings arranged in series;
**that** individual block groups forming paths for dispersing the anode fluid fed from the introduction holes into the small openings are arranged on the upper face of the bottom plate between the projection parts of the introduction holes and the small openings; and
**that** the anode fluid fed from the two introduction holes is brought in contact with the individual projection parts on the upper face of the bottom plate to reduce the flow rate, so that the anode fluid at a reduced flow rate is allowed to flow in the individual paths between the block groups and be then dispersed into the small openings lying between the block groups.

2. A fuel cell according to claim 1, **characterized in that** the paths formed with the block groups are plurally formed and the width of such paths remote from the projection parts is larger than the width of such paths close to the projection parts.

3. A fuel cell according to claim 1, **characterized in that** the paths formed with the block groups are plurally formed and the length of such paths remote from the projection parts is shorter than the length of such paths close to the projection parts.

4. A fuel cell according to claim 1, **characterized in that** the introduction holes are arranged in such a manner that the projection parts on the bottom plate are arranged in an opposite direction to each other toward the direction of the small openings arranged.

5. A fuel cell according to claim 4, **characterized in that** the small openings are arranged in such a manner that the small openings close to the projection parts are more apart from the block groups lying between the projection parts and the small openings than the small openings remote from the projection parts.

6. A fuel cell according to claim 1, **characterized in that** the distance from the block groups to the introduction holes is half-fold or more the distance from the block groups through the introduction holes to the ends of the flow space.

7. A fuel cell comprising a cell with an anode and a cathode connected together through an electrolyte membrane, a cell stack where a plurality of cell units each with a separator equipped with an anode fluid path and the cell are stacked together, and a manifold for supplying the anode fluid to a position of the cell unit where the anode fluid path faces, **characterized in that**
the manifold comprises a top plate equipped with introduction holes through which the anode fluid is introduced, a bottom plate where a plurality of small openings facing the anode fluid path are arranged in series along the direction of the stacked cell units and where the flow space of the anode fluid is formed on the upper face of the bottom plate between the inner face of the top plate and the bottom plate, and a partition plate separating the flow space into a first space on the side of the top plate and a second space on the side of the bottom plate, where the second introduction holes are arranged at positions different from the projection parts of the introduction holes,
where the second introduction holes are two in number as arranged in such a manner that the second projection parts on the bottom plate are arranged through the small openings arranged in series on both the sides of the small openings arranged in series and
where individual block groups forming paths for dispersing the anode fluid fed from the second introduction holes into the small openings are formed on the upper face of the bottom plate between the second projection parts of the second introduction holes and the small openings;
that the flow rate of the anode fluid fed from the introduction holes is reduced in the first space to bring the anode fluid at a reduced flow rate in contact with the second projection parts on the upper face of the bottom plate from the two second introduction holes to reduce the flow rate, so that the anode fluid at a reduced flow rate is allowed to flow in the individual paths formed with the block groups and be then dispersed into the small openings lying between the block groups.

8. A fuel cell according to claim 7, **characterized in that** the path area of the second introduction holes is larger than the path area of the introduction holes.

9. A fuel cell according to claim 7, **characterized in that** the paths formed with the block groups are plurally formed and the width of the paths remote from the second projection parts is larger than the width of the paths close to the second projection parts.

10. A fuel cell according to claim 7, **characterized in that** the paths formed with the block groups are plurally formed and the length of the paths remote from the second projection parts is shorter than the length of the paths close to the second projection parts.

11. A fuel cell according to claim 7, **characterized in that** the second introduction holes are arranged in such a manner that the second projection parts on the bottom plate are arranged in an opposite direction to each other toward the direction of the small openings arranged.

12. A fuel cell according to claim 11, **characterized in that** the small openings close to the second projection parts are arranged in such a manner that the small openings are more apart from the block groups lying between the second projection parts and the small openings than the small openings remote from the second projection parts.

13. A fuel cell according to claim 7, **characterized in that** the distance from the block groups to the second introduction holes is half-fold or more the distance from the block groups through the second introduction holes to the ends of the flow space.
